# EUROPEAN PATENT SPECIFICATION

(11) **EP 3 294 930 B1**
(45) Date of publication and mention of the grant of the patent: **16.03.2022**
(21) Application number: 16791868.9
(22) Date of filing: 12.05.2016
(51) Int. Cl.: C25C 7/00, C25C 1/00

(54) **ELECTROLYTIC VESSEL WITH REINFORCING COMPONENTS**
ELEKTROLYTISCHER BEHÄLTER MIT VERSTÄRKUNGSKOMPONENTEN
CUVE D'ÉLECTROLYSE COMPRENANT DES ÉLÉMENTS DE RENFORCEMENT

(30) Priority: 13.05.2015 US 201562160707 P
(43) Date of publication of application: 21.03.2018
(73) Proprietor: Pultrusion Technique Inc., Saint Bruno, Québec J3V 6B9 (CA)
(72) Inventor: DUFRESNE, Robert, St-Bruno, Québec J3V 2X1 (CA)
(74) Representative: Lavoix
(86) International application number: PCT/CA2016/050542
(87) International publication number: WO 2016/179703

(56) References cited:
- EP-A1- 0 431 313
- WO-A1-97/22541
- CA-A1- 2 012 618
- CA-A1- 2 773 127
- US-A1- 2003 006 134

## Description

### TECHNICAL FIELD

The present product generally relates to hydrometallurgical equipment and more particularly to reinforced electrolytic vessels.

### BACKGROUND

Hydrometallurgical processes make use of electrolytic vessels or tanks for refining non-ferrous metals (including copper, nickel, zinc, nickel, cobalt, manganese and other precious metals) with multiple rows of electrodes plunged in an acidic electrolytic bath contained in the electrolytic vessels. Materials of the electrolytic cells must therefore stand up to highly corrosive conditions and heavy weight of the electrodes and bath.

Known materials used for designing electrolytic vessels include steel reinforced concrete and composite material such as polymer concrete, or glass fiber and carbon fiber-reinforced corrosion-resistant polymers. However, concrete and polymer concrete vessel walls can crack due to the mechanical constraints imposed by the bath and electrodes and internal stresses while the concrete ages. In addition, unbonded or bonded surface liners can be used to cover the inner surface of the vessel. However, liners are prone to damage from impacts of electrodes and may also crack while aging, be altered by corrosion or suffer bad adhesion due to the curing during the casting process of the vessel, thereby enabling the corrosive bath to contact the unprotected walls of the vessel.

US 2003/006134 A1 discloses electrolytic cell receptacles for electrowinning and electrorefining of nonferrous metals which are prepared by molding, wherein the core of the receptacles is constructed of a three-layered polymer concrete composite provided with an envelope of sealing layers of resin reinforced with fiber glass as continuous coatings on the inner and outer surfaces of the core of the receptacle. A pre-woven reinforcement, formed of a framework of fiberglass rods, pultruded with vinyl ester resin, is incorporated in the core.

EP 0 431 313 A1 discloses a container for containing a corrosive electrolyte, such as a sulphuric or hydrochloric acid solution in which minerals are purified in an electrolytic process. The bottom, end and side walls of the container are composed of a cured mixture of 10%-19% of a modified, vinyl ester or polyester thermo-setting resin and the balance consisting of aggregate. The surfaces of the container are coated with a resin layer having a backing layer consisting of about 70%-80% resin and 20%-30% a reinforcement which may comprise a fiber glass mat of non-continuous strands or a light cloth of fiber glass or other synthetic fiber.

There is thus a need for an improved technology that can overcome at least some of the drawbacks of what is known in the field.

### SUMMARY

In one aspect, there is provided a reinforced electrolytic vessel for refining non-ferrous metals according to claim 1. Preferred embodiments of the invention are specified in the dependent claims, whose subject-matter is to be understood as forming an integral part of the present description.

### BRIEF DESCRIPTION OF THE DRAWINGS

Embodiments of the electrolytic vessel and components thereof are represented in and will be further understood in connection with the following figures.
Figure 1 is a perspective view of an electrolytic vessel used for refining non-ferrous metals.
Figure 2 is a semi-transparent cross-sectional view along line II of Figure 1 according to an embodiment of the reinforced vessel.
Figure 3 is a semi-transparent cross-sectional view along line III of Figure 2.
Figure 4 is a cross-sectional view along line IV of Figure 2.
Figure 5 is a view of portion V of Figure 4.
Figure 6 is a semi-transparent cross-sectional view along line VI of Figure 1 according to another embodiment of the reinforced vessel.
Figure 7 is a semi-transparent cross-sectional view along line VII of Figure 6.
Figure 8 is a cross-sectional view along line VIII of Figure 6.
Figure 9 is a view of portion IX of Figure 8.
Figure 10 is a semi-transparent cross-sectional view along line X of Figure 1 according to another embodiment of the reinforced vessel.
Figure 11 is a semi-transparent cross-sectional view along line XI of Figure 10.
Figure 12 is an exploded perspective view of the electrolytic vessel showing the inside hull made of fiberglass, with the semi-transparent inner core made of polymer concrete reinforced with embedded rebars, completed with an outer hull of fiberglass (i.e. envelope).

While the invention will be described in conjunction with example embodiments, it will be understood that it is not intended to limit the scope of the invention to these embodiments.

### DETAILED DESCRIPTION

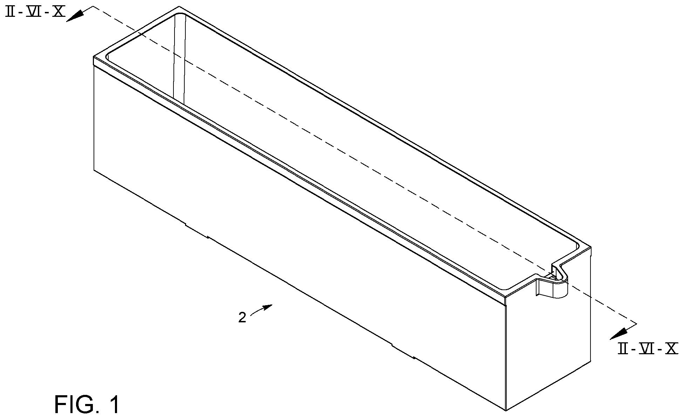

Embodiments illustrated in Figures 1 to 9 relate to a reinforced electrolytic vessel including a plurality of flat pultruded fiberglass rebars embedded in each wall of the vessel and a surrounding multiple-layer fiberglass-based envelope. Flat rebars can offer improved tensile strength when the vessel walls are subjected to internal and external stresses. The number and orientation of the embedded flat pultruded fiberglass rebars may vary and can be adapted according to certain configurations and materials of the vessel. According to the invention, the vessel comprises at least two flat elongated rebars.

### Core

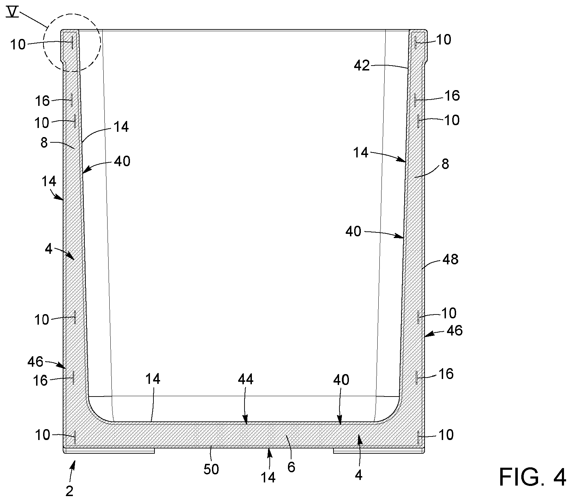

Referring to Figures 1 and 4, a vessel 2 includes a core 4 having a rectangular base 6 and four walls 8 extending from peripheral edges of the core base 6. The core defines a cavity in which an electrolytic liquid or bath can be received. Optionally, the core may be made of polymer concrete or prestressed polymer concrete. The vessel 2 further comprises a plurality of flat pultruded rebars 10 that may be embedded within each of the four core walls 8.

### Rebars

It should be understood that the pultruded rebars of the reinforced vessel are flat in the sense that their cross-section in a transverse direction is inferior to their cross-section in a longitudinal direction. It should be understood that the size and shape of each of the at least two pultruded rebars of a same wall may be different from one rebar to the other rebar. Flat pultruded rebars can offer an increased contact surface with the core (e.g. in comparison to circular rebars) which is available for bonding chemically or mechanically with the material of the core so as to provide enhanced tensile strength to the vessel wall.

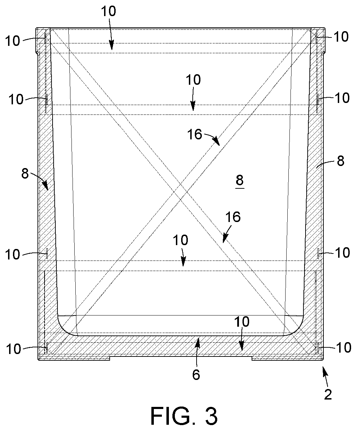

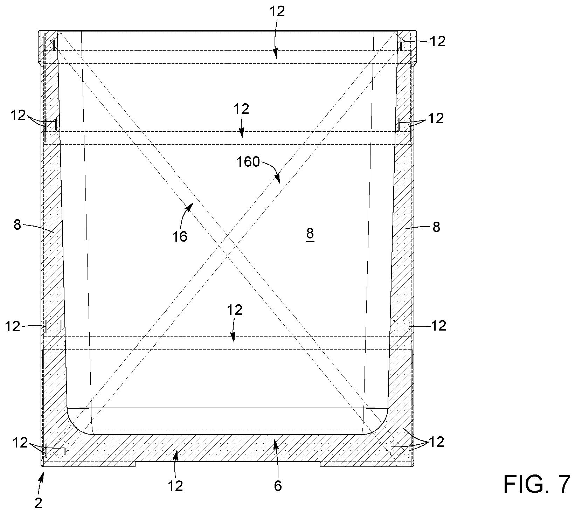

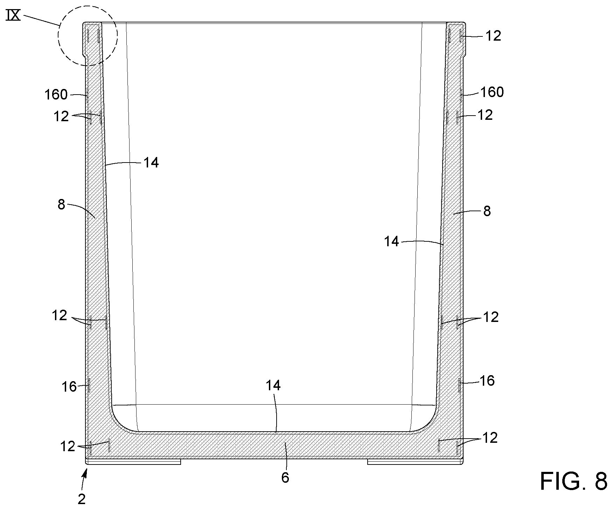

The plurality of flat pultruded rebars of a same vessel wall includes at least two flat rebars. Referring to Figures 3 and 4, the plurality of flat pultruded rebars of a same wall 8 may include at least four horizontal flat rebars 10, distributed along a height of the wall. Referring to Figures 7 and 8, the plurality of pultruded rebars of a same wall may be optionally organized in pairs 12 of two opposed rebars spaced-apart from each other, which may be referred to as "doubled rebars" 12.

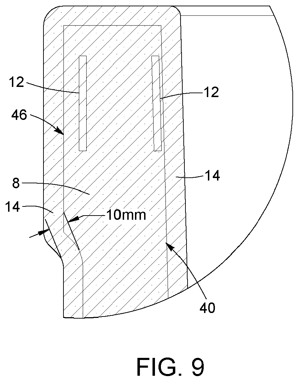

According to an embodiment of the reinforced vessel, the plurality of flat pultruded rebars of a same vessel wall may include a flat horizontal rebar near the top of the wall and three (3) vertical rebars near the top of the wall. One of the vertical rebars is placed in the middle of the width of the wall and the two others are spaced apart near the outer and inner side of the wall as shown in Figure 9.

The space between the rebars of a pair 12 may depend for example on a thickness of the core wall 8. It should be understood that the doubled flat pultruded rebars may be used in order to increase the moment of inertia in a transversal direction of the vessel.

It should be understood that the flat rebars can include fiberglass and can be pultruded according to known pultrusion techniques.

### Envelope

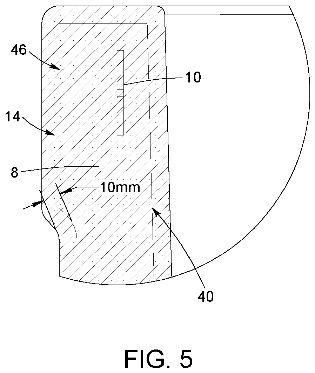

The mechanical resistance of the vessel walls to internal and external stresses is further improved by the use of a multiple-layer fiberglass-based envelope 14 surrounding the vessel core 4, as seen for example in Figures 4 and 5. The envelope includes a continuous fiberglass-based layer.

The multiple-layer fiberglass-based envelope includes multiple layers of at least one of fiberglass mat, knitted fiberglass, stitched, stitched-mat, knitted-mat and fiberglass woven roving. Optionally, the multiple-layer fiberglass-based envelope may include successive layers of fiberglass mat, knitted fiberglass, stitched, stitched-mat, knitted-mat and fiberglass woven roving. Optionally, a maximum thickness of the multiple-layer fiberglass-based envelope may be between about 8 mm and about 12 mm, optionally 10 mm. It should be understood that the choice of fiberglass-based material for the envelope may depend for example on the desired orientation of the fibers.

Referring to Figure 4, it should be understood that an inner surface of the core 40 corresponds to the combination of an inner surface of the core walls 42 and a top surface of the core base 44, which could be in contact with the electrodes and electrolytic bath without the presence of the envelope 14. An outer surface of the core 46 corresponds to the combination of a remaining external surface of the core walls 48 and a bottom surface of the core base 50.

It should be understood that an outer envelope (hull) is thinner in terms of chemical protection or structural protection than the inner envelope (hull) which is in contact with acid.

It should be also understood that the continuous fiberglass-based layer refers to a layer including fiberglass layering continuously at least the inner surface of the core. For example, a continuous fiberglass woven roving layer included in the multiple-layer fiberglass-based envelope may result from the superposition of two one-piece fiberglass woven roving extending from one vessel wall to the opposed vessel wall.

According to optional embodiments of the reinforced electrolytic vessel, positioning of the flat rebars may be chosen according to the thickness of the wall 8. For example, referring to Figures 5 and 9, some flat rebars 10 or 12 may be positioned proximate to the inner surface of the core 40. Alternatively, referring to Figure 9, other flat rebars 12 may be positioned proximate to the outer surface of the core 46.

According to another embodiment not illustrated in the Figures, the flat pultruded rebars may be optionally centered with respect to the cross-section of the wall in a transversal direction and aligned with respect to one another so as to be substantially coplanar. It should be understood that other flat pultruded rebars may be additionally placed proximal to the surface of the wall. Each rebar of the plurality of flat pultruded rebars are elongated so as to be a one-piece rebar extending from one wall to the opposed contiguous wall.

According to another embodiment, a pair of crossed flat pultruded rebars may be embedded within each vessel wall, proximate to the outer surface of the core of each of the four vessel walls. Optionally, the crossed rebars may be embedded either within the core or within the multiple-layer fiberglass envelope.

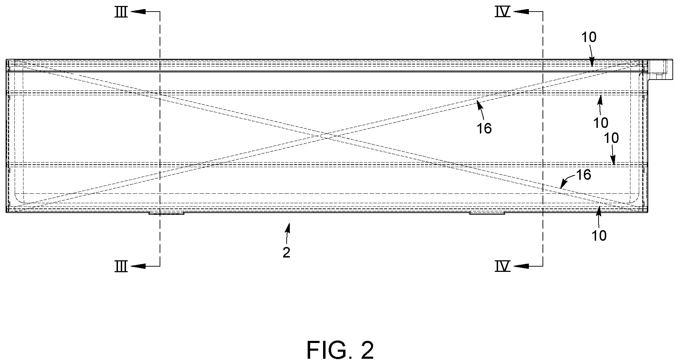

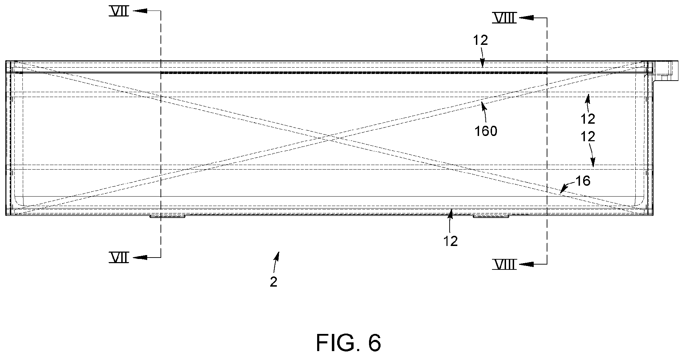

Referring to Figures 2 and 4, a pair of crossed rebars 16 may be embedded within the core 4 each of the four walls 8, proximate to the outer surface 46 of the core. It should be understood that, depending on the position of the crossed rebars within the core, crossed rebars 16 may be in contact with other horizontal rebars 10 or 12. Referring to Figures 6 and 8, a pair of crossed rebars 16 and 160 may be embedded within core 4 each of the four walls 8, proximate to the outer surface 46 of the core. Optionally, one rebar 16 may be embedded within the core 4 of the vessel and the other rebar 160 may be embedded within the multiple-layer envelope 14, both proximate to the outer surface 46 of the core 4.

It should be understood that additional horizontal, vertical or crossed pultruded rebars may be embedded within the core or within the multiple-layer fiberglass-based envelope so as to further strengthen the structure of the vessel.

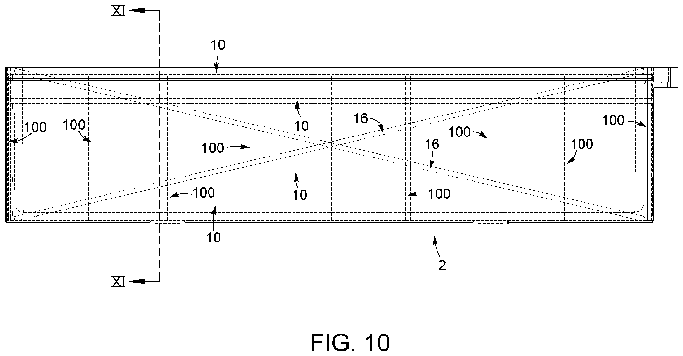

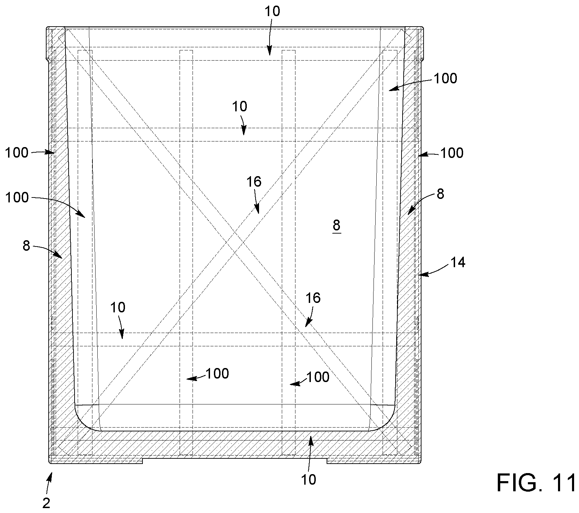

Referring to Figures 10 and 11, vertical elongated fiberglass pultruded rebars 100 may be embedded in each core wall 8. Optionally, vertical rebars may also be embedded in the multiple-layer fiberglass based envelope 14.

### Chemical protection

According to an optional embodiment, a layer of gel coat or other chemical protection layers or sheets may be present on the inner and outer surfaces of the core, or beneath the multiple-layer fiberglass-based envelope so as to reinforce the chemical bonding between the resin of the polymer concrete (core) and the fibers of the fiberglass-based envelope. The gel coat or other chemical protection layers or sheets can also offer an additional barrier against corrosion.

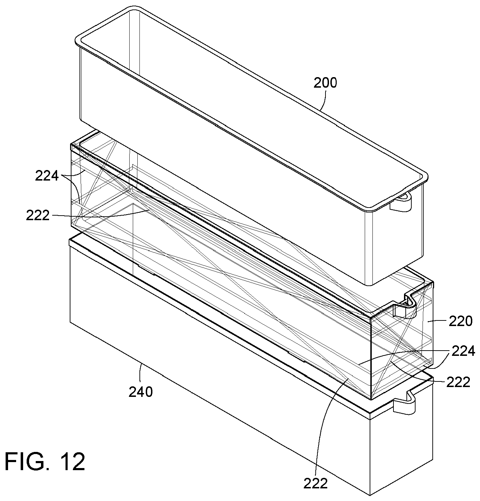

According to a particular embodiment, as shown in Figure 12, three layers are shown ready to be nested into one another. A first top envelope (200) made of fiberglass mat is ready to nest into the polymer-concrete core (220) reinforced with crossed rebars (222) and horizontal rebars (224) embedded within its walls. A bottom envelope layer (240) made of fiberglass mat is provided underneath and ready to receive the core.

### Process

In a particular embodiment, the process of constructing the electrolytic vessel core is shown upside-down in Figure 12. The vessel is constructed with two hulls (i.e. envelopes) in composite fiberglass, one interior envelope and another exterior envelope. The inner envelope (200) is made of a multiplicity of fiberglass layers. While coating the inner hull, or after coating, the outside hull (240) is constructed of Fiberglas layers on the outer walls of the inner envelope, leaving a space therebetween to form a cavity. Then, the cavity created between the inner hull (200) and the outer hull (240) is filled with Fiberglas rebars (222, 224) that are held with tools well known in the art (such as studs or pins), The cavity is then filled layer by layer with polymer concrete to create the core (220).

Particularly, the rebars' surface may be ground and properly chemically treated to provide covalent chemical adhesion between the polymer concrete resins and the pultruded rebars.

According to a particular embodiment, the first two innermost layers of the internal envelope are made of "gel coat" (such as pure resin with little chemical additives) to obtain optimal corrosion resistance (i.e. against sulfuric acid and/or Cl₂ and/or Cl-, chlorine). These two layers are then baked or cured by heat or catalyst.

After the two gel coats, an anticorrosive fiberglass coat is added on the outer surface of the inner envelope, such as type A or Type C fiberglass, and then a further layer of synthetic fiber can be added (such as polyester), or vice versa. These layers are then baked or cured with chemical or metallic catalyst or by UV curing or infrared curing system. These layers are baked following standard heat temperature curing system.

Further layers of polymer concrete can then be poured on placed rebars, and the whole vessel is then cooked once more, from 40°C to 125°C.

Then follows the addition of the outer envelope structural fiberglass layers with further cooking/baking/heating.

It should be understood that the reinforced vessel is not limited to include at least two rebars in each wall of the core as illustrated in the Figures but may include at least one rebar embedded in at least one wall of the core, optionally in at least two walls of the core, optionally in at least three walls of the core and further optionally in each wall of the core. It should be understood that the number, shape and orientation of the rebars may vary and can be chosen to fulfill specific strength requirements for the vessel. According to the invention, the vessel comprises at least two flat elongated rebars.

## Claims

1. An electrolytic vessel (2) for refining metals, the vessel (2) comprising:
a core (4) shaped to hold an electrolytic liquid, the core comprising a rectangular core base (6) and four walls (8) extending upwardly from peripheral edges of the core base (6);
a multiple-layer fiberglass-based envelope (14) surrounding the core (4), the envelope (14) comprising multiple layers of at least one of fiberglass mat, knitted fiberglass, stitched, stitched-mat, knitted-mat and fiberglass woven roving, thereby defining:
an inner hull (200) layering an inner surface (40) of the core (4), and
an outer hull (240) layering an outer surface (46) of the core (4); and
at least two elongated rebars (10, 12, 16, 160) embedded within the core (4), within the multiple-layer fiberglass-based envelope (14) or a combination thereof, the at least two elongated rebars being flat whereby their cross-section in a transverse direction is inferior to their cross-section in a longitudinal direction;
wherein the outer hull is thinner in terms of chemical protection or structural protection than the inner hull which is in contact with acid.

2. The vessel (2) of claim 1, wherein the rebars (10, 12, 16, 160) are made in fiberglass, optionally pultruded.

3. The vessel (2) of claim 1 or 2, wherein at least one rebar (12) is positioned proximate to an inner surface (40) of the core.

4. The vessel (2) of claim 1 or 2, wherein at least one rebar (12) is positioned proximate to an outer surface (46) of the core.

5. The vessel (2) of any one of claims 1 to 3, wherein a pair of rebars , in a crossed configuration, is embedded, proximate to an outer surface of the core (4), within each of the four core walls (8).

6. The vessel (2) of any one of claims 1 to 5, wherein the rebars (10, 12, 16, 160) are unitary and extend from one wall (8) to an opposed contiguous wall (8).

7. The vessel (2) of any one of claims 1 to 6, wherein the rebars (10, 12, 16, 160) are arranged as at least two rebars in each wall, optionally as at least two horizontal rebars, and further optionally distributed along a height of each wall (8).

8. The vessel (2) of claim 7, wherein at least one rebar is centered with respect to a cross-section of the wall (8) in a transversal direction.

9. The vessel (2) of any one of claims 1 to 8, wherein the core (4) comprises a matrix comprising concrete or polymer material or a mixture thereof.

10. The vessel (2) of any one of claims 1 to 9, wherein the multiple-layer fiberglass-based envelope comprises the woven roving fiberglass that is made of a superposition of two one-piece fiberglass woven roving extending from one core wall to the opposed core wall.

11. The vessel (2) of any one of claims 1 to 10, wherein the multiple-layer fiberglass-based envelope (14) has a maximum thickness of between 8 mm and 12 mm, optionally of 10 mm.

12. The vessel (2) of claim 9, wherein a surface of the at least two elongated rebars (10, 12, 16, 160) is chemically treated to provide covalent chemical adhesion with the matrix of the core (4).

13. A method of reinforcing electrolytic vessel (2) for refining metals, comprising the steps of:
providing a multiple-layer fiberglass-based envelope (14) comprising multiple layers of at least one of fiberglass mat, knitted fiberglass, stitched, stitched-mat, knitted-mat and fiberglass woven roving, by forming an inner hull (200) and an outer hull (240) and leaving a space therebetween to form a cavity;
providing a matrix to fill the cavity between the inner hull (200) and the outer hull and form a core (4) shaped to hold an electrolytic liquid, the core (4) comprising a rectangular core base (6) and four walls (8) extending upwardly from peripheral edges of the core base (6); and
distributing a plurality of elongated pultruded rebars (10, 12, 16, 160) embedded within the matrix to reduce cracking thereof, the elongated rebars being flat whereby their cross-section in a transverse direction is inferior to their cross-section in a longitudinal direction;
wherein the outer hull is made thinner in terms of chemical protection or structural protection than the inner hull which is in contact with acid.

14. The method of claim 13, wherein the rebars (10, 12, 16, 160) are provided as: at least two rebars in each wall, fiberglass rebars, rebars arranged in spaced apart pairs, crossed rebars, or mixtures thereof.

15. The method of claim 13 or 14, wherein the matrix comprising concrete or polymer material or a mixture thereof, and the method further comprises chemically treating a surface of the elongated rebars (10, 12, 16, 160) to provide covalent chemical adhesion with the matrix of the core (4).

## Patentansprüche

1. Elektrolytischer Behälter (2) zum Raffinieren von Metallen, der Behälter (2) umfassend:
einen Kern (4), der geformt ist, um eine elektrolytische Flüssigkeit zu enthalten, der Kern umfassend eine rechteckige Kernbasis (6) und vier Wände (8), die sich von den Umfangsrändern der Kernbasis (6) nach oben erstrecken;
eine mehrschichtige glasfaserbasierte Umhüllung (14), die den Kern (4) umgibt, die Umhüllung (14) umfassend mehrere Schichten aus mindestens einem von Glasfasermatte, gestricktem Glasfasergewebe, genähtem, mattengenähtem, mattengestricktem und gewebtem Glasfaservlies, wodurch Folgendes definiert wird:
eine innere Schale (200), die eine innere Oberfläche (40) des Kerns (4) bedeckt, und
eine äußere Schale (240), die eine Außenfläche (46) des Kerns (4) bedeckt; und
mindestens zwei länglichen Bewehrungsstäbe (10, 12, 16, 160), die in den Kern (4), innerhalb der mehrschichtigen glasfaserbasierten Umhüllung (14) oder eine Kombination davon eingebettet sind, wobei die mindestens zwei länglichen Bewehrungsstäbe flach sind, wodurch ihr Querschnitt in einer Querrichtung geringer ist als ihr Querschnitt in einer Längsrichtung;
wobei die äußere Schale in Bezug auf den chemischen Schutz oder den strukturellen Schutz dünner ist als die innere Schale, die mit Säure in Berührung kommt.

2. Behälter (2) nach Anspruch 1, wobei die Bewehrungsstäbe (10, 12, 16, 160) aus Glasfasern gefertigt, optional gezogen sind.

3. Behälter (2) nach Anspruch 1 oder 2, wobei mindestens ein Bewehrungsstab (12) in der Nähe einer Innenfläche (40) des Kerns positioniert ist.

4. Behälter (2) nach Anspruch 1 oder 2, wobei mindestens ein Bewehrungsstab (12) in der Nähe einer Außenfläche (46) des Kerns positioniert ist.

5. Behälter (2) nach einem der Ansprüche 1 bis 3, wobei ein Paar Bewehrungsstäbe in einer gekreuzten Konfiguration in der Nähe einer Außenfläche des Kerns (4) innerhalb jeder der vier Kernwände (8) eingebettet ist.

6. Behälter (2) nach einem der Ansprüche 1 bis 5, wobei die Bewehrungsstäbe (10, 12, 16, 160) einteilig sind und sich von einer Wand (8) zu einer gegenüberliegenden, angrenzenden Wand (8) erstrecken.

7. Behälter (2) nach einem der Ansprüche 1 bis 6, wobei die Bewehrungsstäbe (10, 12, 16, 160) als mindestens zwei Bewehrungsstäbe, optional als mindestens zwei horizontale Bewehrungsstäbe, in jeder Wand angeordnet sind und ferner optional entlang einer Höhe von jeder Wand (8) verteilt sind.

8. Behälter (2) nach Anspruch 7, wobei mindestens ein Bewehrungsstab in Bezug auf einen Querschnitt der Wand (8) in einer Querrichtung zentriert ist.

9. Behälter (2) nach einem der Ansprüche 1 bis 8, wobei der Kern (4) eine Matrix umfasst, umfassend Beton oder Polymermaterial oder ein Gemisch davon.

10. Behälter (2) nach einem der Ansprüche 1 bis 9, wobei die mehrschichtige glasfaserbasierte Umhüllung das gewebte Glasfaservlies umfasst, das aus einer Überlagerung von zwei einteiligen gewebten Glasfaservliesen besteht, die sich von einer Kernwand zu der gegenüberliegenden Kernwand erstrecken.

11. Behälter (2) nach einem der Ansprüche 1 bis 10, wobei die mehrschichtige glasfaserbasierte Umhüllung (14) eine maximale Stärke zwischen 8 mm und 12 mm, optional von 10 mm, aufweist.

12. Behälter (2) nach Anspruch 9, wobei eine Oberfläche der mindestens zwei länglichen Bewehrungsstäbe (10, 12, 16, 160) chemisch behandelt ist, um eine kovalente chemische Haftung mit der Matrix des Kerns (4) bereitzustellen.

13. Verfahren zum Verstärken eines elektrolytischen Behälters (2) zum Raffinieren von Metallen, umfassend die folgenden Schritte:
Bereitstellen einer mehrschichtigen glasfaserbasierten Umhüllung (14), umfassend mehrere Schichten aus mindestens einem von Glasfasermatte, gestricktem Glasfasergewebe, genähtem, mattengenähtem, mattengestricktem und gewebtem Glasfaservlies, indem eine innere Schale (200) und eine äußere Schale (240) gebildet werden und ein Raum dazwischen belassen wird, um einen Hohlraum zu bilden;
Bereitstellen einer Matrix, um den Hohlraum zwischen der inneren Schale (200) und der äußeren Hülle zu füllen und einen Kern (4) zu bilden, der geformt ist, um eine elektrolytische Flüssigkeit zu enthalten, der Kern (4) umfassend eine rechteckige Kernbasis (6) und vier Wände (8), die sich von den Umfangsrändern der Kernbasis (6) nach oben erstrecken; und
Verteilen einer Vielzahl von länglichen gezogenen Bewehrungsstäben (10, 12, 16, 160), die innerhalb der Matrix eingebettet sind, um deren Rissbildung zu verringern, wobei die länglichen Bewehrungsstäbe flach sind, wodurch ihr Querschnitt in einer Querrichtung geringer ist als ihr Querschnitt in einer Längsrichtung;
wobei die äußere Schale hinsichtlich des chemischen Schutzes oder des strukturellen Schutzes dünner ausgeführt ist als die innere Schale, die mit Säure in Kontakt ist.

14. Verfahren nach Anspruch 13, wobei die Bewehrungsstäbe (10, 12, 16, 160) als Folgendes bereitgestellt sind: mindestens zwei Bewehrungsstäbe in jeder Wand, Glasfaser-Bewehrungsstäbe, paarweise beabstandet angeordnete Bewehrungsstäbe, gekreuzte Bewehrungsstäbe oder Gemische davon.

15. Verfahren nach Anspruch 13 oder 14, die Matrix umfassend Beton oder Polymermaterial oder ein Gemisch davon und wobei das Verfahren ferner ein chemisches Behandeln einer Oberfläche der länglichen Bewehrungsstäbe (10, 12, 16, 160) umfasst, um eine kovalente chemische Adhäsion mit der Matrix des Kerns (4) bereitzustellen.

## Revendications

1. Cuve d'électrolyse (2) pour l'affinage de métaux, la cuve (2) comprenant :
une partie intérieure (4) formée pour contenir un liquide électrolytique, la partie intérieure comprenant une base intérieure rectangulaire (6) et quatre parois (8) s'étendant vers le haut à partir des bords périphériques de la base intérieure (6) ;
une enveloppe en fibre de verre à couches multiples (14) entourant la partie intérieure (4), l'enveloppe (14) comprenant des couches multiples d'au moins l'un des éléments parmi un mat de fibre de verre, une fibre de verre tricotée, une fibre de verre cousue, un mat cousu, un mat tricoté et un tissu stratifil de fibres de verre, définissant ainsi :
une coque intérieure (200) recouvrant une surface intérieure (40) de la partie intérieure (4), et
une coque extérieure (240) recouvrant une surface extérieure (46) de la partie intérieure (4) ; et
au moins deux barres d'armature allongées (10, 12, 16, 160) intégrées dans la partie intérieure (4), dans l'enveloppe en fibre de verre à couches multiples (14) ou dans une combinaison de celles-ci, les au moins deux barres d'armature allongées étant plates, de sorte que leur section transversale dans une direction transversale est inférieure à leur section transversale dans une direction longitudinale ;
dans laquelle la coque extérieure est plus mince en termes de protection chimique ou de protection structurelle que la coque intérieure qui est en contact avec l'acide.

2. Cuve (2) selon la revendication 1, dans laquelle les barres d'armature (10, 12, 16, 160) sont constituées de fibre de verre et sont éventuellement pultrudées.

3. Cuve (2) selon la revendication 1 ou 2, dans laquelle au moins une barre d'armature (12) est positionnée à proximité d'une surface intérieure (40) de la partie intérieure.

4. Cuve (2) selon la revendication 1 ou 2, dans laquelle au moins une barre d'armature (12) est positionnée à proximité d'une surface extérieure (46) de la partie intérieure.

5. Cuve (2) selon l'une quelconque des revendications 1 à 3, dans laquelle une paire de barres d'armature, dans une configuration croisée, est intégrée, à proximité d'une surface extérieure de la partie intérieure (4), dans chacune des quatre parois de la partie intérieure (8).

6. Cuve (2) selon l'une quelconque des revendications 1 à 5, dans laquelle les barres d'armature (10, 12, 16, 160) sont unitaires et s'étendent d'une paroi (8) à une paroi contiguë opposée (8).

7. Cuve (2) selon l'une quelconque des revendications 1 à 6, dans laquelle les barres d'armature (10, 12, 16, 160) sont agencées sous la forme d'au moins deux barres d'armature dans chaque paroi, éventuellement sous la forme d'au moins deux barres d'armature horizontales, et sont en outre éventuellement réparties le long d'une hauteur de chaque paroi (8).

8. Cuve (2) selon la revendication 7, dans laquelle au moins une barre d'armature est centrée par rapport à une section transversale de la paroi (8) dans une direction transversale.

9. Cuve (2) selon l'une quelconque des revendications 1 à 8, dans laquelle la partie intérieure (4) comprend une matrice comprenant du béton ou un matériau polymère ou un mélange de ceux-ci.

10. Cuve (2) selon l'une quelconque des revendications 1 à 9, dans laquelle l'enveloppe en fibre de verre à couches multiples comprend la fibre de verre stratifil qui est constituée d'une superposition de deux tissus stratifil de fibres de verre d'une seule pièce s'étendant d'une paroi de la partie intérieure à la paroi de la partie intérieure opposée.

11. Cuve (2) selon l'une quelconque des revendications 1 à 10, dans laquelle l'enveloppe en fibre de verre à couches multiples (14) a une épaisseur maximale comprise entre 8 mm et 12 mm, éventuellement de 10 mm.

12. Cuve (2) selon la revendication 9, dans laquelle une surface des au moins deux barres d'armature allongées (10, 12, 16, 160) est traitée chimiquement pour fournir une adhésion chimique covalente avec la matrice de la partie intérieure (4).

13. Procédé de renforcement d'une cuve d'électrolyse (2) pour l'affinage de métaux, comprenant les étapes suivantes :
la fourniture d'une enveloppe en fibre de verre à couches multiples (14) comprenant des couches multiples d'au moins l'un des éléments parmi un mat de fibre de verre, une fibre de verre tricotée, une fibre de verre cousue, un mat cousu, un mat tricoté et un tissu stratifil de fibres de verre, en formant une coque intérieure (200) et une coque extérieure (240) et en laissant un espace entre celles-ci pour former une cavité ;
la fourniture d'une matrice pour remplir la cavité entre la coque intérieure (200) et la coque extérieure et former une partie intérieure (4) formée pour contenir un liquide électrolytique, la partie intérieure (4) comprenant une base intérieure rectangulaire (6) et quatre parois (8) s'étendant vers le haut à partir des bords périphériques de la base intérieure (6) ; et
la distribution d'une pluralité de barres d'armature pultrudées allongées (10, 12, 16, 160) intégrées dans la matrice pour réduire la fissuration de celle-ci, les barres d'armature allongées étant plates de sorte que leur section transversale dans une direction transversale est inférieure à leur section transversale dans une direction longitudinale ;
dans lequel la coque extérieure est rendue plus mince en termes de protection chimique ou de protection structurelle que la coque intérieure qui est en contact avec l'acide.

14. Procédé selon la revendication 13, dans lequel les barres d'armature (10, 12, 16, 160) sont prévues sous la forme d'au moins deux barres d'armature dans chaque paroi, de barres d'armature en fibre de verre, de barres d'armature agencées en paires espacées, de barres d'armature croisées, ou de combinaisons de celles-ci.

15. Procédé selon la revendication 13 ou 14, dans lequel la matrice comprend du béton ou un matériau polymère ou un mélange de ceux-ci, et le procédé comprend en outre le traitement chimique d'une surface des barres d'armature allongées (10, 12, 16, 160) pour fournir une adhésion chimique covalente avec la matrice de la partie intérieure (4).
